# EUROPÄISCHE PATENTSCHRIFT

(11) **EP 3 555 995 B1**
(45) Veröffentlichungstag und Bekanntmachung des Hinweises auf die Patenterteilung: **01.09.2021**
(21) Anmeldenummer: 17804191.9
(22) Anmeldetag: 27.11.2017
(51) Int. Cl.: H02K 3/50, H02K 3/52

(54) **FÜHRUNGSRING ZUR ANBINDUNG AN EINEM GEHÄUSE EINER ELEKTRISCHEN MASCHINE**
GUIDE RING FOR CONNECTION TO A HOUSING OF AN ELECTRIC MACHINE
BAGUE DE GUIDAGE DESTINÉE À ÊTRE FIXÉE À UN CARTER D'UN MOTEUR ÉLECTRIQUE

(30) Priorität: 15.12.2016 DE 102016225170
(43) Veröffentlichungstag der Anmeldung: 23.10.2019
(73) Patentinhaber: Vitesco Technologies GmbH, 30165 Hannover (DE)
(72) Erfinder: WIETHOFF, Swen, 10829 Berlin (DE); DMITRASINOVIC, Zoran, 14055 Berlin (DE)
(86) Internationale Anmeldenummer: PCT/EP2017/080487
(87) Internationale Veröffentlichungsnummer: WO 2018/108502

(56) Entgegenhaltungen:
- EP-A1- 2 752 974
- DE-A1-102016 204 955
- JP-A- 2009 290 921
- JP-A- 2010 011 627
- US-A1- 2007 273 221

## Beschreibung

Die Erfindung betrifft einen Führungsring zur Anbindung an einem Gehäuse einer elektrischen Maschine, insbesondere einer elektrischen Maschine für ein Kraftfahrzeug.

Es sind Führungsringe bekannt, welche Stromschienen aufnehmen und an einem Gehäuse einer elektrischen Maschine angebunden sind, wobei das Gehäuse eine feste Struktur mit größerer Masse als der Führungsring bildet. Es ist weiterhin bekannt, einen solchen Führungsring an einen innenliegenden Wickelkopf der elektrischen Maschine mithilfe von quellbaren Matten anzubinden, wobei die Stromschienen in Kunststoffnuten eingelegt und anschließend vergossen werden. Dieses Verfahren ist somit durch einen Montageprozess mit nachfolgendem Vergießen gekennzeichnet. Die DE 10 2016 204 955 A1 beschreibt einen Motor, wobei der Motor eine Sammelschienenhalterung mit Halterungsvorstehabschnitten umfasst, die in Kontakt mit einer Gehäuseinnenumfangsfläche stehen.

Die US 2007/273221 A1 beschreibt einen bürstenlosen Motor mit einer ringförmigen Stromschiene.

JP 2009 290 921 A zeigt ein Ringelement zur Aufnahme elektrischer Leiter, wobei das Ringelement Laschen zur Verspannung mit einem Gehäuse aufweist.

JP 2010 011627 A offenbart ein Ringelement zur Aufnahme elektrischer Sammelschienen, wobei das Ringelement mittels einer "snap-fit" Wirkung mit einer Endkappe des Stators verbunden ist.

Es ist die Aufgabe der vorliegenden Erfindung, einen Führungsring bereitzustellen, welcher Stromschienen aufnimmt und in schwingungsdämpfender Weise an einem Gehäuse einer elektrischen Maschine angebunden ist, sodass Brüche der Stromschienen vermieden werden können.

Die Aufgabe wird gelöst durch die Gegenstände der unabhängigen Patentansprüche. Vorteilhafte Ausführungsformen sind Gegenstand der abhängigen Ansprüche, der folgenden Beschreibung sowie der Figuren.

Gemäß einem ersten Aspekt der Erfindung wird ein Führungsring zur Anbindung an einem Gehäuse einer elektrischen Maschine bereitgestellt. Der Führungsring umfasst einen Grundkörper mit einem Ringelement, mehrere Stromschienen, und mehrere Druckelemente, wobei die Stromschienen von dem Grundkörper umspritzt sind, und wobei die Druckelemente von einer äußeren Umfangsfläche des Grundkörpers abstehen und dazu eingerichtet sind, den Führungsring reibschlüssig mit einer inneren Aufnahmefläche des Gehäuses der elektrischen Maschine zu verbinden.

Die Stromschienen sind dabei von dem Grundkörper, welcher zumindest im Wesentlichen aus Kunststoff besteht, umspritzt, wobei ein entsprechender Umspritzprozess insbesondere mit einfachen Werkzeugen ohne zusätzliche seitliche Schieber realisiert werden kann. Ein Montageprozess und ein nachfolgendes Vergießen können dabei entfallen. Damit kann eine geringe Teilevielfalt erreicht werden. Somit kann die Herstellung des Führungsrings mit Stromschienen in einem einzigen Prozessschritt erfolgen. Dabei können insbesondere Toleranzen entfallen, welche sich aus einem Montageprozess ergeben würden.

Die radialen Maße der inneren Aufnahmefläche des Gehäuses der elektrischen Maschine korrespondieren dabei mit den jeweiligen radialen äußeren Abmessungen der Druckelemente. Bei der inneren Aufnahmefläche des Gehäuses kann es sich insbesondere um eine innere ringförmige Umfangsfläche handeln. In einem zusammengesetzten Zustand, gemäß welchem der Führungsring reibschlüssig mit der inneren Umfangsfläche des Gehäuses der elektrischen Maschine verbunden ist, üben die Druckelemente eine Normalkraft auf die innere Umfangsfläche des Gehäuses der elektrischen Maschine aus, sodass der Reibschluss zwischen dem Führungsring und der inneren Umfangsfläche entsteht, welcher verhindert, dass sich der Führungsring relativ gegenüber der inneren Umfangsfläche bewegt. Durch den Reibschluss werden Schwingungen der umspritzten Stromschienen so weit gedämmt, das ein Brechen der Stromschienen vermieden werden kann.

Erfindungsgemäß ist in einer ersten Ausgestaltung vorgesehen, dass die Druckelemente jeweils eine Biegelasche umfassen, welche jeweils den Grundkörper bereichsweise radial umgeben. Die Biegelaschen sind jeweils an der äußeren Umfangsfläche des Grundkörpers befestigt ist, wobei jeweils ein Keil zwischen dem Grundkörper und jeder der Biegelaschen angeordnet ist, und wobei die Keile dazu eingerichtet sind, die Biegelaschen radial nach außen zu drücken, so dass die Biegelaschen reibschlüssig mit der inneren Aufnahmefläche des Gehäuses der elektrischen Maschine verbunden sind.

Dabei können zwei Enden der Biegelasche mit umfänglichem Abstand zueinander an der äußeren Umfangsfläche des Grundkörpers befestigt sein. Alternativ kann die Biegelasche auch mit lediglich einseitig oder mit nur einem ihrer Enden an der äußeren Umfangsfläche des Grundkörpers befestigt sein. Bevorzugt ist vorgesehen, dass die beiden Enden der Biegelaschen jeweils einteilig mit dem Führungsring verbunden sind, indem der Führungsring zusammen mit den Biegelaschen in einem gemeinsamen Spritzprozess erzeugt wird. Dies erhöht die Stabilität der Biegelaschen und erleichtert den Herstellungsprozess. Die Kombination aus Biegelaschen und Keilen ermöglicht einen besonders festen Reibschluss zwischen dem Führungsring und dem Gehäuse des Motors, sodass Schwingungen der umspritzten Stromschienen besonders stark gedämpft werden können, um ein Brechen der Stromschienen besonders sicher zu vermeiden.

Die Biegelaschen können jeweils zwei Kontaktflächen zur Kontaktierung der inneren Aufnahmefläche des Gehäuses der elektrischen Maschine ausbilden, wobei die Keile jeweils in der Umfangsrichtung mittig zwischen den Kontaktflächen angeordnet sind. Mit anderen Worten wird der Keil in der Mitte zwischen den beiden Kontaktflächen zwischen dem Grundkörper des Führungsrings und der jeweiligen Biegelasche eingebracht bzw. eingetrieben. Durch den Abstand zwischen dem Keil und den beiden Kontaktflächen entstehen zwei Klemmlängen, die jeweils eine Vorspannung erzeugen (Federwirkung). Dadurch wird ein Verlust des Reibschlusses zum Gehäuse durch Setzerscheinungen vermieden.

Weiterhin kann der Keil mittels wenigstens eines Filmscharniers, z.B. mittels zweier in Umfangsrichtung nebeneinander angeordneter identischer Filmscharniere, einteilig mit dem Grundkörper verbunden sein. Mit anderen Worten kann der Keil über das oder die Filmscharnier (e) direkt an den Führungsring angespritzt sein. Dadurch kann der Keil in einem Arbeitsprozess mit den übrigen Komponenten des Führungsrings gespritzt werden, was sich positiv auf den Fertigungsaufwand auswirkt. Weiterhin ist der Keil durch die Verbindung mit dem Grundkörper bereits vormontiert, wodurch die Montage Beziehung Weise die Anwendung des Führungsrings an dem Gehäuse der elektrischen Maschine erleichtert und ferner ein Verlust des Keils vermieden werden kann.

Gemäß einer weiteren Ausführungsform ist vorgesehen, dass wenigstens einer der Keile, bevorzugt jeder Keile, eine erste Außenverzahnung aufweist, in welche eine erste Zunge des Grundkörpers, insbesondere dessen Ringelements, einrasten kann, um den Keil in einer axialen Relativposition zwischen dem Grundkörper, insbesondere dessen Ringelement, und der Biegelasche zu fixieren. Dadurch kann sichergestellt werden, dass der Keil in seiner vorgesehenen Endlage stabilisiert wird und ein Lösen des Keils (eventuell durch Vibration) vermieden wird. Alternativ oder zusätzlich kann wenigstens einer der Keile, bevorzugt jeder der Keile, eine zweite Außenverzahnung aufweisen, in welche eine zweite Zunge der Biegelasche einrasten kann, um den Keil in der axialen Relativposition zwischen dem Grundkörper und der Biegelasche zu fixieren.

Weiterhin kann vorteilhaft vorgesehen sein, dass an wenigstens einer der Biegelaschen, bevorzugt an jeder der Biegelaschen, wenigstens ein Halteelement, z.B. eine Haltenase oder zwei nebeneinander angeordnete identische Haltenasen, angeordnet ist, wobei das Halteelement radial nach außen von der Biegelasche absteht und dazu eingerichtet ist, in eine korrespondierende Ausnehmung, insbesondere eine Nut der inneren Aufnahmefläche des Gehäuses der elektrischen Maschine eingeführt zu werden, sodass der Führungsring und das Gehäuse der elektrischen Maschine insbesondere in einer axialen Richtung zusätzlich formschlüssig miteinander verbunden sind. Somit entsteht ein insbesondere axialer und bevorzugt spielfreier Formschluss zwischen dem Führungsring und dem Motorgehäuse, sofern wenigstens ein Halteelement in die Ausnehmung der inneren Aufnahmefläche des Gehäuses der elektrischen Maschine eingreift. Gemäß dieser Ausführungs- form ist der Führungsring reibschlüssig und formschlüssig mit dem Motorgehäuse verbunden, wodurch Schwingungen der umspritzten Stromschienen besonders stark gedämpft werden können, sodass ein Brechen der Stromschienen besonders sicher vermieden werden kann.

Das Haltelement kann an seiner Unterseite angefast sein. Mit anderen Worten werden Schrägen unterhalb des wenigstens einen Halteelements vorgesehen, insbesondere unterhalb der wenigstens einen Haltenase, wodurch ein fließender radialer Linienkontakt zur Ausnehmung, insbesondere zu einer Gehäusenut der inneren Aufnahmefläche des Gehäuses der elektrischen Maschine erzielt werden kann. Weiterhin kann frühzeitig eine axiale nach unten gerichtete Kraftkomponente bei der Montage des Keils abgefangen werden.

In einer zur ersten Ausgestaltung alternativen zweiten Ausgestaltung ist erfindungsgemäß vorgesehen, dass die Druckelemente jeweils ein Federelement umfassen, wobei die Federelemente von dem Ringelement des Grundkörpers zumindest bereichsweise in radialer Richtung abstehen. Weiterhin sind die Federelemente an der äußeren Umfangsfläche des Grundkörpers befestigt und ferner dazu eingerichtet, den Führungsring reibschlüssig mit der inneren Aufnahmefläche des Gehäuses der elektrischen Maschine zu verbinden.

In einem zusammengesetzten Zustand, gemäß welchem der Führungsring reibschlüssig mit der inneren Aufnahmefläche des Gehäuses der elektrischen Maschine verbunden ist, üben die Federelemente eine Normalkraft auf die innere Aufnahmefläche des Gehäuses der elektrischen Maschine aus, sodass der Reibschluss zwischen dem Führungsring und der inneren Aufnahmefläche entsteht, welcher verhindert, dass sich der Führungsring relativ gegenüber der inneren Aufnahmefläche bewegt. Durch den Reibschluss werden Schwingungen der umspritzten Stromschienen so weit gedämmt, das ein Brechen der Stromschienen vermieden werden kann.

Gemäß einem zweiten Aspekt der Erfindung wird eine elektrische Maschine mit einem Gehäuse und einem Führungsring gemäß dem ersten Aspekt in der ersten erfindungsgemäße Ausgestaltung oder der zweiten erfindungsgemäßen Ausgestaltung bereitgestellt. Bei der elektrischen Maschine kann es sich beispielsweise um einen Asynchronmotor oder um einen Synchronmotor für ein Fahrzeug, insbesondere zu dessen (unterstützendem oder alleinigem) Antrieb handeln. Das Gehäuse der elektrischen Maschine weist eine innere Aufnahmefläche zur Anbindung des Führungsrings auf, wobei die innere Aufnahmefläche den Führungsring radial umgibt und die

Druckelemente des Führungsrings den Führungsring reibschlüssig mit der inneren Aufnahmefläche des Gehäuses der elektrischen Maschine verbinden. Bezüglich Effekten, Vorteilen und Ausführungsformen der elektrischen Maschine wird zur Vermeidung von Wiederholungen auf die vorstehenden Ausführungen im Zusammenhang mit dem erfindungs- gemäßen Führungsring verwiesen.

Im Folgenden werden Ausführungsbeispiele der Erfindung anhand der schematischen Zeichnung näher erläutert. Hierbei zeigt
- Fig. 1: eine perspektivische Ansicht eines Ausführungsbeispiels eines erfindungsgemäßen Führungsrings,
- Fig. 2: eine perspektivische Ansicht eines Teils des Führungsrings nach Fig. 1, wobei der Führungsring an einem Gehäuse einer elektrischen Maschine angebunden ist, welche teilweise gezeigt ist,
- Fig. 3: eine Längsschnittdarstellung eines Teils des Führungsrings nach Fig. 1,
- Fig. 4: eine perspektivische Ansicht eines weiteren Ausführungsbeispiels eines erfindungsgemäßen Führungsrings und
- Fig. 5: eine Draufsicht auf den Führungsring nach Fig. 4.

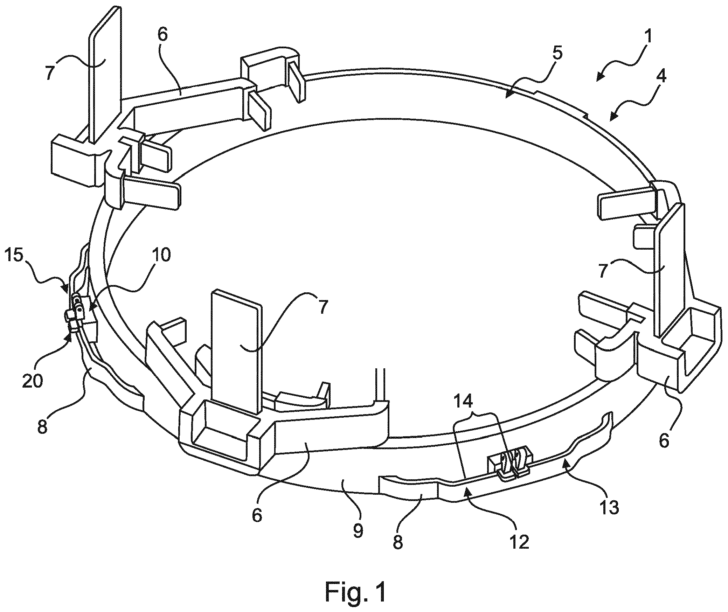

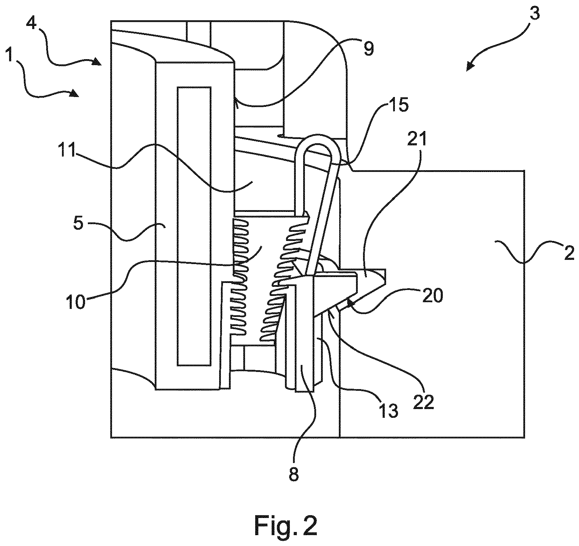

Fig.1 bis 3 zeigen einen Führungsring 1, welcher in Fig. 1 einzeln für sich dargestellt ist und in Fig. 2 an ein Gehäuse 2 einer elektrischen Maschine 3 angebunden ist. Der Führungsring 1 umfasst einen Grundkörper 4 mit einem Ringelement 5 und mit mehreren Halteelemente 6, innerhalb welcher jeweils Stromschienen 7 aufgenommen sind. In dem gezeigten Ausführungsbeispiel sind alle Elemente des Grundkörpers 4 einteilig miteinander verbunden, wobei der Grundkörper 4 einteilig in einem Spritzgussverfahren hergestellt worden ist.

Der Führungsring 1 bzw. dessen Ringelement 5 weist insgesamt drei identische Druckelemente in Form von Biegelaschen 8 auf, von denen in Fig. 1 zwei Biegelaschen 8 sichtbar sind. Die dritte Biegelasche befindet sich auf der in Fig. 1 nicht sichtbaren äußeren Rückseite des Ringelements 5. Die drei Biegelaschen sind in Umfangsrichtung des Ringelements 5 mit Abstand zueinander angeordnet. Dabei sind in dem gezeigten Ausführungsbeispiel jeweils zwei Enden der Biegelaschen 8 mit umfänglichem Abstand zueinander an einer äußeren Umfangsfläche 9 des Ringelements 5 befestigt.

In dem gezeigten Ausführungsbeispiel sind die zwei Enden der Biegelaschen 8 jeweils einteilig mit dem Ringelement 5 verbunden. Die Biegelaschen 8 verlaufen in radialer Richtung jeweils mit Abstand zu der äußeren Umfangsfläche 9 des Ringelements 5, wobei die Biegelaschen 8 in radialer Richtung weiter außen angeordnet sind als das Ringelement 5 des Grundkörpers 4. Mit anderen Worten umgeben die einzelnen Biegelaschen 8 jeweils das Ringelement 5 des Grundkörpers 4 bereichsweise in radialer Richtung.

Zwischen den Biegelaschen 8 und dem Ringelement 5 entsteht auf diese Weise jeweils ein Zwischenraum, innerhalb welchem jeweils ein Keil 10 angeordnet ist, wobei die Keilflächen des Keils 10 jeweils die entsprechende Biegelasche 8 und das Ringelement 5 berühren. Die Keile 10 werden derart zwischen das Ringelement 5 und die Biegelaschen 8 getrieben, dass die Biegelaschen 8 radial nach außen gedrückt werden. Auf diese Weise sind die Biegelaschen 8 - wie dies durch Fig. 2 gezeigt es - reibschlüssig bzw. kraftschlüssig mit dem Gehäuse 2 der elektrischen Maschine 3 verbunden, wobei die Biegelaschen 8 auf eine innere Mantelfläche 11 des Gehäuses 2 der elektrischen Maschine 3 eine Normalkraft ausüben, welche verhindert, dass sich der Führungsring 1 in einer axialen Richtung relativ zu der inneren Mantelfläche 11 des Gehäuses 2 der elektrischen Maschine 3 bewegen kann. Auf diese Weise können Schwingungen der umspritzten Stromschienen 7 derart gedämpft werden, das ein Brechen der Stromschienen 7 sicher vermieden werden kann.

In dem durch Fig. 1 bis 3 gezeigten Ausführungsbeispiel bilden die Biegelaschen 8 jeweils eine erste Kontaktfläche 12 und eine zweite Kontaktfläche 13 aus. Die Kontaktflächen 12, 13 sind in radialer Richtung jeweils am weitesten außen angeordnet und berühren die innere Mantelfläche 11 des Gehäuses 2 der elektrischen Maschine 3 (vgl. Fig. 2). Die übrigen Bereiche hingegen, welche in radialer Richtung weiter innen liegen, berühren die innere Mantelfläche 11 des Gehäuses 2 der elektrischen Maschine 3 nicht. Die Keile 10 sind dabei in Umfangsrichtung jeweils mittig zwischen den beiden Kontaktflächen 12, 13 angeordnet. Durch diesen gleichen Abstand zwischen dem jeweiligen Keil 10 und den beiden Kontaktflächen 12, 13 entstehen zwei gleiche Klemmlängen 14, die jeweils eine Vorspannung erzeugen (Federwirkung), wo- durch ein Verlust des Reibschlusses zum Gehäuse 2 durch Setzerscheinungen vermieden werden kann. Die Keile 10 sind jeweils mittels zweier in Umfangsrichtung nebeneinander angeordneter identischer Filmscharniere 15 einteilig mit einer der Biegelaschen 8 verbunden, wobei die Filmscharniere 15 an die jeweilige Biegelasche 8 angespritzt sind.

Jeder der Keile 10 weist ferner eine erste Außenverzahnung 16 und eine zweite Außenverzahnung 17 auf. Die Außenverzahnungen 16, 17 sind jeweils an den Keilflächen der Keile 10 angeordnet. Dabei ist die erste Außenverzahnung 16 dem Ringelement 5 zugewandt und die zweite Außenverzahnung 17 ist jeweils der entsprechenden Biegelasche 8 zugewandt. Das Ringelement 5 bildet pro Keil 10 jeweils erste Zunge 18 aus und die Biegelaschen 8 bilden jeweils eine zweite Zunge 19 aus. Die ersten Zungen 18 und die zweiten Zunge 19 sind in axialer Richtung auf der gleichen Höhe angeordnet, wobei die erste Zungen 18 in radialer Richtung von dem Ringelement 5 abstehen, und die zweiten Zunge 19 in radialer Richtung von der jeweiligen Biegelasche 8 abstehen. In der radialen Richtung ist somit jeweils auf gleicher axialer Höhe eine der ersten Zungen 18 in Richtung einer der zweiten Zunge 19 orientiert und umgekehrt. Ein Querschnitt der ersten Außenverzahnung 16 korrespondiert dabei jeweils mit einem Querschnitt der betreffenden ersten Zunge 18 und ein Querschnitt der jeweiligen zweiten Außenverzahnung 17 korrespondiert jeweils mit einem Querschnitt der betreffenden zweiten Zunge 19.

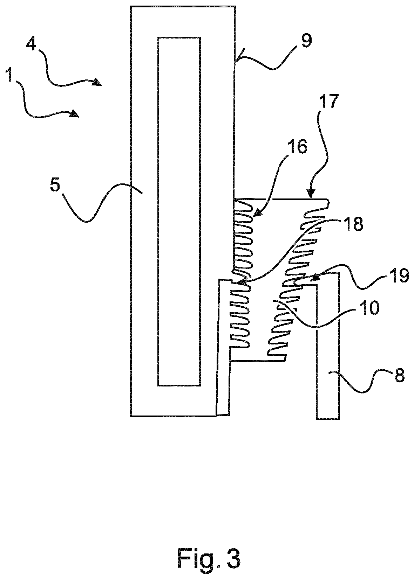

Die ersten und zweiten Zungen 18, 19 greifen (wie besonders gut aus Fig. 2 und 3 ersichtlich ist) in die erste Außenverzahnung 16 bzw. in die zweite Außenverzahnung 17 ein, sodass die Keile 10 in ihrer jeweiligen vorgesehenen axialen Relativposition zwischen dem Ringelement 5 und der betreffenden Biegelasche 8 fixiert sind. Dadurch ist sichergestellt, dass die Keile 10 in ihrer vorgesehenen Endlage stabilisiert werden und ein Lösen der Keile 10 (eventuell durch Vibration) vermieden werden kann. In Fig. 3 sind lediglich aus Gründen der besseren Übersicht insbesondere kein Filmscharnier 15, keine Kontaktfläche 12, 13 und keine (im Folgenden beschriebene) Haltenase 20 gezeigt, wobei diese Elemente jedoch Teil des Führungsringes 1 sind.

Weiterhin sind an jeder der Biegelaschen 8 jeweils zwei in Umfangsrichtung nebeneinander im Bereich der Filmscharniere 15 angeordnete Halteelemente in Form von Haltenasen 20 angeordnet, wobei die jeweiligen Haltenasen 20 radial nach außen von der betreffenden Biegelasche 8 abstehen und in eine korrespondierende Nut 21 der inneren Aufnahmefläche 11 des Gehäuses 2 der elektrischen Maschine 3 eingeführt werden können (Fig. 2), sodass der Führungsring 1 und das Gehäuse 2 der elektrischen Maschine 3 in axialer Richtung spielfrei formschlüssig miteinander verbunden sind. Somit sind der Führungsring 1 und das Gehäuse 2 der elektrischen Maschine 3 sowohl reibschlüssig bzw. kraftschlüssig als auch formschlüssig miteinander verbunden, wodurch Schwingungen der umspritzten Stromschienen 7 besonders stark gedämpft werden können, sodass ein Brechen der Stromschienen 7 besonders sicher vermieden werden kann.

Wie aus Fig. 2 ersichtlich ist, sind die Haltenasen 20 an ihrer Unterseite angefast bzw. es sind Schrägen 22 unterhalb der Haltenasen 20 vorgesehen, wodurch ein fließender radialer Linienkontakt zu der Nut 21 der inneren Mantelfläche 11 des Gehäuses 2 der elektrischen Maschine 3 erzielt werden kann und frühzeitig eine axiale nach unten gerichtete Kraftkomponente während der Montage der Keile 10 abgefangen werden kann.

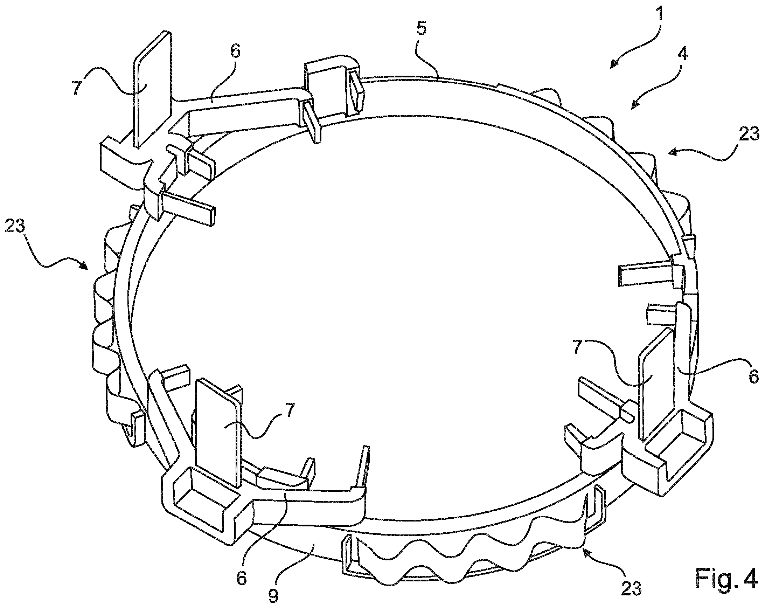

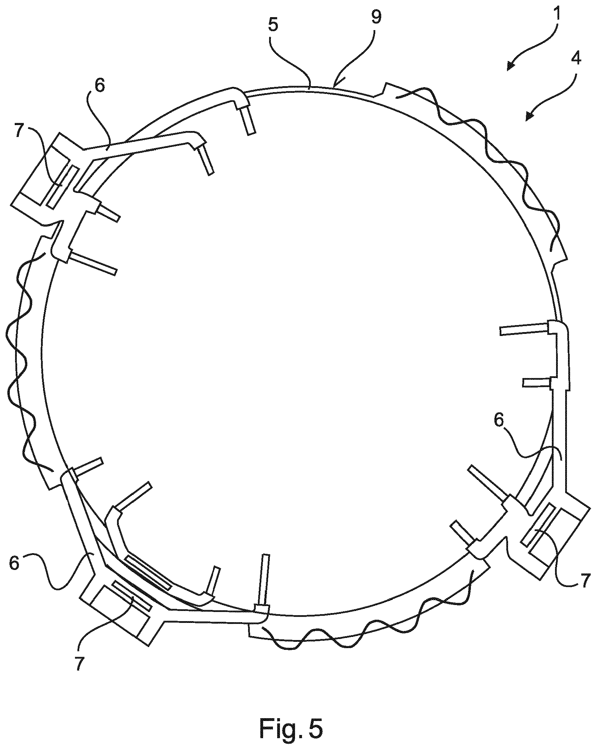

Fig. 4 und 5 zeigen ein alternatives Ausführungsbeispiel eines erfindungsgemäßen Führungsrings 1. Der Führungsring 1 umfasst einen Grundkörper 4 mit einem Ringelement 5 und mit mehreren Halteelementen 6, innerhalb welcher jeweils Stromschienen 7 aufgenommen sind. In dem gezeigten Ausführungsbeispiel sind alle Elemente des Grundkörpers 4 einteilig miteinander verbunden, wobei der Grundkörper 4 einteilig in einem Spritzgussverfahren hergestellt worden ist.

Der Führungsring nach Fig. 4 und 5 unterscheidet sich von dem durch Fig. 1 bis 3 gezeigten Ausführungsbeispiel insbesondere dahingehend, dass anstatt der Biegelaschen 8 und der Keile 10 zur reibschlüssigen Verbindung mit einer inneren Aufnahmefläche 11 eines Gehäuses 2 einer elektrischen Maschine 3 (ähnlich wie durch Fig. 2 gezeigt) drei Druckelemente in Form von Federelementen vorgesehen sind, in dem gezeigten Ausführungsbeispiel drei in Umfangsrichtung voneinander beabstandet angeordnete Wellenfederelemente 23.

Die Wellenfederelemente 23 stehen jeweils von dem Ringelement 5 des Grundkörpers 4 bereichsweise in radialer Richtung ab. Dabei sind die Wellenfederelemente 23 an der äußeren Umfangsfläche 9 des Ringelements 5 des Grundkörpers 4 befestigt, wobei das Ringelement 5 in entsprechenden Befestigungsbereichen jeweils den gleichen Außendurchmesser aufweist. Die Wellenfederelemente 23 stellen einen ausreichend harten Federkontakt (Normalkraft) zur inneren Mantelfläche 11 des Gehäuses 2 der elektrischen Maschine 3 her, sodass ein Reibschluss bzw. Kraftschluss zwischen dem Führungsring 1 und dem Gehäuse 2 der elektrischen Maschine 3 entsteht. Der Reibschluss verhindert, dass sich der Führungsring 1 in axialer Richtung relativ gegenüber der inneren Aufnahmefläche 11 bewegt. Durch den Reibschluss können somit Schwingungen der umspritzten Stromschienen 7 so weit gedämmt werden, das ein Brechen der Stromschienen 7 vermieden werden kann.

## Patentansprüche

1. Führungsring (1) zur Anbindung an einem Gehäuse (2) einer elektrischen Maschine (3), der Führungsring (1) umfassend:
- einen Grundkörper (4) mit einem Ringelement (5),
- mehrere Stromschienen (7), und
- mehrere Druckelemente (8),
wobei
- die Stromschienen (7) von dem Grundkörper (4) umspritzt sind, und
- die Druckelemente (8) von einer äußeren Umfangsfläche (9) des Grundkörpers (4) abstehen und dazu eingerichtet sind, den Führungsring (1) reibschlüssig mit einer inneren Aufnahmefläche (11) des Gehäuses (2) der elektrischen Maschine (3) zu verbinden, wobei die Druckelemente (8) eine Normalkraft auf eine innere Umfangsfläche des Gehäuses (2) der elektrischen Maschine (3) ausüben, sodass der Reibschluss zwischen dem Führungsring (1) und der inneren Umfangsfläche entsteht, wobei
- die Druckelemente (8) jeweils eine Biegelasche (8) umfassen, welche jeweils den Grundkörper (4) bereichsweise radial umgeben,
- die Biegelaschen (8) an der äußeren Umfangsfläche (9) des Grundkörpers (4) befestigt sind,
- jeweils ein Keil (10) zwischen dem Grundkörper (4) und jeder der Biegelaschen (8) angeordnet ist,
- die Keile (10) dazu eingerichtet sind, die Biegelaschen (8) radial nach außen zu drücken, so dass die Biegelaschen (8) reibschlüssig mit der inneren Aufnahmefläche (11) des Gehäuses (2) der elektrischen Maschine (3) verbunden sind.

2. Führungsring (1) nach Anspruch 1, wobei die Biegelaschen (8) jeweils zwei Kontaktflächen (12, 13) zur Kontaktierung der inneren Aufnahmefläche (11) des Gehäuses (2) der elektrischen Maschine (3) ausbilden, wobei die Keile (10) jeweils in der Umfangsrichtung mittig zwischen den Kontaktflächen (12, 13) angeordnet sind.

3. Führungsring (1) nach einem der vorstehenden Ansprüche, wobei der Keil (10) mittels wenigstens eines Filmscharniers (15) einteilig mit der Biegelasche (8) verbunden ist.

4. Führungsring (1) nach einem der vorstehenden Ansprüche, wobei wenigstens einer der Keile (10) eine erste Außenverzahnung (16) aufweist, in welche eine erste Zunge (18) des Grundkörpers (4) einrasten kann, um den Keil (10) in einer axialen Relativposition zwischen dem Grundkörper (4) und der Biegelasche (8) zu fixieren.

5. Führungsring (1) nach einem der vorstehenden Ansprüche, wobei der Keil (10) zusätzlich eine zweite Außenverzahnung (17) aufweist, in welche eine zweite Zunge (19) der Biegelasche (8) einrasten kann, um den Keil (10) in der axialen Relativposition zwischen dem Grundkörper (4) und der Biegelasche (8) zu fixieren.

6. Führungsring (1) nach einem der vorstehenden Ansprüche, wobei
- an wenigstens einer der Biegelaschen (8) ein Halteelement (20) angeordnet ist,
- das Halteelement (20) radial nach außen von der Biegelasche (8) absteht,
- das Halteelement (20) dazu eingerichtet ist, in eine korrespondierende Ausnehmung (21) der inneren Aufnahmefläche (11) des Gehäuses (2) der elektrischen Maschine (3) eingeführt zu werden, sodass der Führungsring (1) und das Gehäuse (2) der elektrischen Maschine (3) formschlüssig miteinander verbunden sind.

7. Führungsring (1) nach Anspruch 6, wobei das Haltelement (20) an seiner Unterseite angefast ist.

8. Führungsring (1) zur Anbindung an einem Gehäuse (2) einer elektrischen Maschine (3), der Führungsring (1) umfassend:
- einen Grundkörper (4) mit einem Ringelement (5),
- mehrere Stromschienen (7), und
- mehrere Druckelemente (23),
wobei
- die Stromschienen (7) von dem Grundkörper (4) umspritzt sind, und
- die Druckelemente (23) von einer äußeren Umfangsfläche (9) des Grundkörpers (4) abstehen und dazu eingerichtet sind, den Führungsring (1) reibschlüssig mit einer inneren Aufnahmefläche (11) des Gehäuses (2) der elektrischen Maschine (3) zu verbinden, wobei die Druckelemente (23) eine Normalkraft auf eine innere Umfangsfläche des Gehäuses (2) der elektrischen Maschine (3) ausüben, sodass der Reibschluss zwischen dem Führungsring (1) und der inneren Umfangsfläche entsteht, wobei
- die Druckelemente (23) jeweils ein Federelement (23) umfassen, wobei die Federelemente (23) jeweils von dem Ringelement (5) des Grundkörpers (4) zumindest bereichsweise in radialer Richtung abstehen,
- die Federelemente (23) an der äußeren Umfangsfläche (9) des Grundkörpers (4) befestigt sind, und
- die Federelemente (23) dazu eingerichtet sind, den Führungsring (1) reibschlüssig mit der inneren Aufnahmefläche (11) des Gehäuses (2) der elektrischen Maschine (3) zu verbinden.

9. Elektrische Maschine (3) mit einem Gehäuse (2) und einem Führungsring (1) nach einem der Ansprüche 1 bis 7 oder nach Anspruch 8, wobei
- das Gehäuse (2) eine innere Aufnahmefläche (11) zur Anbindung des Führungsrings (1) aufweist,
- die innere Aufnahmefläche (11) den Führungsring (1) radial umgibt und
- die Druckelemente (8, 23) des Führungsrings (1) den Führungsring (1) reibschlüssig mit der inneren Aufnahmefläche (11) des Gehäuses (2) der elektrischen Maschine (3) verbinden.

## Claims

1. Guide ring (1) for connection to a housing (2) of an electric machine (3), the guide ring (1) comprising:
- a main body (4) having a ring element (5),
- a plurality of busbars (7), and
- a plurality of pressure elements (8),
wherein
- the busbars (7) are overmoulded by the main body (4), and
- the pressure elements (8) project from an outer circumferential surface (9) of the main body (4) and are configured to connect the guide ring (1) to an inner receiving surface (11) of the housing (2) of the electric machine (3) in a frictionally engaging manner, wherein the pressure elements (8) exert a normal force on an inner circumferential surface of the housing (2) of the electric machine (3) such that the frictional engagement between the guide ring (1) and the inner circumferential surface is formed, wherein
- the pressure elements (8) each comprise a bending plate (8), which in each case radially surrounds the main body (4) regionally,
- the bending plates (8) are fastened to the outer circumferential surface (9) of the main body (4),
- in each case one wedge (10) is arranged between the main body (4) and each of the bending plates (8),
- the wedges (10) are configured to push the bending plates (8) radially outwards such that the bending plates (8) are connected in a frictionally engaging manner to the inner receiving surface (11) of the housing (2) of the electric machine (3).

2. Guide ring (1) according to Claim 1, wherein the bending plates (8) in each case form two contact surfaces (12, 13) for making contact with the inner receiving surface (11) of the housing (2) of the electric machine (3), wherein the wedges (10) are in each case arranged centrally between the contact surfaces (12, 13) in the circumferential direction.

3. Guide ring (1) according to either of the preceding claims, wherein the wedge (10) is connected integrally to the bending plate (8) by means of at least one film hinge (15).

4. Guide ring (1) according to one of the preceding claims, wherein at least one of the wedges (10) has a first outer toothing (16), into which a first tongue (18) of the main body (4) can latch in order to fix the wedge (10) in an axial relative position between the main body (4) and the bending plate (8).

5. Guide ring (1) according to one of the preceding claims, wherein the wedge (10) additionally has a second outer toothing (17), into which a second tongue (19) of the bending plate (8) can latch in order to fix the wedge (10) in the axial relative position between the main body (4) and the bending plate (8).

6. Guide ring (1) according to one of the preceding claims, wherein
- a holding element (20) is arranged on at least one of the bending plates (8),
- the holding element (20) projects radially outwards from the bending plate (8),
- the holding element (20) is configured to be introduced into a corresponding recess (21) in the inner receiving surface (11) of the housing (2) of the electric machine (3) such that the guide ring (1) and the housing (2) of the electric machine (3) are connected to one another in a form-fitting manner.

7. Guide ring (1) according to Claim 6, wherein the holding element (20) is bevelled at its bottom side.

8. Guide ring (1) for connection to a housing (2) of an electric machine (3), the guide ring (1) comprising:
- a main body (4) having a ring element (5),
- a plurality of busbars (7), and
- a plurality of pressure elements (23),
wherein
- the busbars (7) are overmoulded by the main body (4), and
- the pressure elements (23) project from an outer circumferential surface (9) of the main body (4) and are configured to connect the guide ring (1) to an inner receiving surface (11) of the housing (2) of the electric machine (3) in a frictionally engaging manner, wherein the pressure elements (23) exert a normal force on an inner circumferential surface of the housing (2) of the electric machine (3) such that the frictional engagement between the guide ring (1) and the inner circumferential surface is formed, wherein
- the pressure elements (23) each comprise a spring element (23), wherein the spring elements (23) each project in a radial direction from the ring element (5) of the main body (4) at least regionally,
- the spring elements (23) are fastened to the outer circumferential surface (9) of the main body (4), and
- the spring elements (23) are configured to connect the guide ring (1) to the inner receiving surface (11) of the housing (2) of the electric machine (3) in a frictionally engaging manner.

9. Electric machine (3) having a housing (2) and having a guide ring (1) according to one of Claims 1 to 7 or according to Claim 8, wherein
- the housing (2) has an inner receiving surface (11) for the connection of the guide ring (1),
- the inner receiving surface (11) radially surrounds the guide ring (1), and
- the pressure elements (8, 23) of the guide ring (1) connect the guide ring (1) to the inner receiving surface (11) of the housing (2) of the electric machine (3) in a frictionally engaging manner.

## Revendications

1. Bague de guidage (1) destinée à être attachée à un carter (2) d'un moteur électrique (3), la bague de guidage (1) comprenant :
- un corps de base (4) muni d'un élément annulaire (5),
- plusieurs rails conducteurs (7), et
- plusieurs éléments de pression (8),
- les rails conducteurs (7) étant enrobés par injection par le corps de base (4), et
- les éléments de pression (8) faisant saillie à partir d'une surface circonférentielle extérieure (9) du corps de base (4) et étant conçus pour relier par friction la bague de guidage (1) à une surface de réception intérieure (11) du carter (2) du moteur électrique (3), les éléments de pression (8) exerçant une force normale sur une surface circonférentielle intérieure du carter (2) du moteur électrique (3), de telle sorte que la friction entre la bague de guidage (1) et la surface circonférentielle intérieure soit obtenue,
- les éléments de pression (8) comprenant chacun une patte flexible (8), qui entoure à chaque fois radialement le corps de base (4) en zones,
- les pattes flexibles (8) étant fixées sur la surface circonférentielle extérieure (9) du corps de base (4),
- un coin (10) étant à chaque fois agencé entre le corps de base (4) et chacune des pattes flexibles (8),
- les coins (10) étant conçus pour pousser radialement vers l'extérieur les pattes flexibles (8), de telle sorte que les pattes flexibles (8) soient reliées par friction à la surface de réception intérieure (11) du carter (2) du moteur électrique (3).

2. Bague de guidage (1) selon la revendication 1, les pattes flexibles (8) formant à chaque fois deux surfaces de contact (12, 13) destinées à venir en contact avec la surface de réception intérieure (11) du carter (2) du moteur électrique (3), les coins (10) étant à chaque fois agencés dans la direction circonférentielle au milieu entre les surfaces de contact (12, 13).

3. Bague de guidage (1) selon l'une quelconque des revendications précédentes, le coin (10) étant relié à la patte flexible (8) d'un seul tenant au moyen d'au moins une charnière pelliculaire (15).

4. Bague de guidage (1) selon l'une quelconque des revendications précédentes, au moins un des coins (10) comprenant une première denture extérieure (16), dans laquelle une première languette (18) du corps de base (4) peut s'encliqueter, afin de fixer le coin (10) dans une position axiale relative entre le corps de base (4) et la patte flexible (8).

5. Bague de guidage (1) selon l'une quelconque des revendications précédentes, le coin (10) comprenant en outre une deuxième denture extérieure (17), dans laquelle une deuxième languette (19) de la patte flexible (8) peut s'encliqueter, afin de fixer le coin (10) dans la position axiale relative entre le corps de base (4) et la patte flexible (8).

6. Bague de guidage (1) selon l'une quelconque des revendications précédentes,
- un élément de retenue (20) étant agencé sur au moins une des pattes flexibles (8),
- l'élément de retenue (20) faisant saillie radialement vers l'extérieur à partir de la patte flexible (8),
- l'élément de retenue (20) étant conçu pour être introduit dans un évidement correspondant (21) de la surface de réception intérieure (11) du carter (2) du moteur électrique (3), de telle sorte que la bague de guidage (1) et le carter (2) du moteur électrique (3) soient reliés l'un à l'autre par accouplement de forme.

7. Bague de guidage (1) selon la revendication 6, l'élément de retenue (20) étant chanfreiné sur son côté inférieur.

8. Bague de guidage (1) destinée à être attachée à un carter (2) d'un moteur électrique (3), la bague de guidage (1) comprenant :
- un corps de base (4) muni d'un élément annulaire (5),
- plusieurs rails conducteurs (7), et
- plusieurs éléments de pression (23),
- les rails conducteurs (7) étant enrobés par injection par le corps de base (4), et
- les éléments de pression (23) faisant saillie à partir d'une surface circonférentielle extérieure (9) du corps de base (4) et étant conçus pour relier par friction la bague de guidage (1) à une surface de réception intérieure (11) du carter (2) du moteur électrique (3), les éléments de pression (23) exerçant une force normale sur une surface circonférentielle intérieure du carter (2) du moteur électrique (3), de telle sorte que la friction entre la bague de guidage (1) et la surface circonférentielle intérieure soit obtenue,
- les éléments de pression (23) comprenant chacun un élément ressort (23), les éléments ressorts (23) faisant à chaque fois saillie à partir de l'élément annulaire (5) du corps de base (4) au moins en zones dans la direction radiale,
- les éléments ressorts (23) étant fixés sur la surface circonférentielle extérieure (9) du corps de base (4), et
- les éléments ressorts (23) étant conçus pour relier par friction la bague de guidage (1) à la surface de réception intérieure (11) du carter (2) du moteur électrique (3).

9. Moteur électrique (3) muni d'un carter (2) et d'une bague de guidage (1) selon l'une quelconque des revendications 1 à 7 ou selon la revendication 8,
- le carter (2) comprenant une surface de réception intérieure (11) destinée à être attachée à la bague de guidage (1),
- la surface de réception intérieure (11) entourant radialement la bague de guidage (1), et
- les éléments de pression (8, 23) de la bague de guidage (1) reliant par friction la bague de guidage (1) à la surface de réception intérieure (11) du carter (2) du moteur électrique (3).
